# FASCICULE DE BREVET EUROPEEN

(11) **EP 1 685 997 B1**
(45) Date de publication et mention de la délivrance du brevet: **12.03.2008**
(21) Numéro de dépôt: 06290122.8
(22) Date de dépôt: 18.01.2006
(51) Int. Cl.: B60J 10/10

(54) **Véhicule automobile possédant un ruban sensible à la pression à proximité d'une arête de l'ouvrant**
Kraftfahrzeug mit einer druckempfindlichen Streife nah am Rand einer Klappe
Vehicle with a pressure-sensitive strip close to the edge of a wing

(30) Priorité: 28.01.2005 FR 0500892
(43) Date de publication de la demande: 02.08.2006
(73) Titulaire: Heuliez, 79140 Cerizay (FR)
(72) Inventeur: Queveau, Paul, 79140 Montravers (FR); Dubreuil, Régis, 49300 Cholet (FR); Baudeau, Marc, 79140 Bretignolles (FR)
(74) Mandataire: Bredema

(56) Documents cités:
- EP-A- 0 870 892
- DE-A1- 10 047 085
- US-A- 6 076 886
- US-A1- 2004 195 940
- US-B1- 6 297 605

## Description

L'invention concerne un ouvrant de véhicule automobile dont les mouvements de fermeture et/ou d'ouverture sont actionnés par des moyens moteurs. Plus particulièrement, l'invention concerne des ouvrants pour véhicule du type cabriolet et notamment un capot de coffre ou un toit escamotable composé de plusieurs éléments de toit rigides.

Dans l'art antérieur, il est connu des ouvrants de véhicule convertible dont les mouvements d'ouverture et de fermeture sont actionnés par des moyens moteurs.

Un des problèmes de ce type d'ouvrant est de sécuriser l'ouverture et la fermeture d'ouvrant, en particulier lors d'un mouvement automatique. En particulier, les arêtes de l'ouvrant situées à proximité de la carrosserie du véhicule ou d'une autre partie mobile de l'ouvrant lorsque l'ouvrant est fermé, sont susceptibles de pincer des objets ou des corps.

En particulier, l'arête située à la périphérie du capot peut pincer une main ou des objets mal positionnés entre l'élément de carrosserie et l'arête du capot.

De même, les bords avant et arrière des éléments de toit sont susceptibles de pincer un doigt ou une main placé entre un l'élément de toit et la traverse de pare-brise ou entre deux éléments de toit.

Les pincements précédemment décrits sont particulièrement dangereux. En effet, les ouvrants sont actionnés par des actionneurs hydrauliques ou électriques particulièrement puissants étant donné le poids des ouvrants.

Dans l'art antérieur, il est connu des capteurs sans contacts, tels que les capteurs capacitifs, qui permettent de détecter des éventuelles interférences entre l'ouvrant et un corps ou un objet. Cependant, les capteurs sans contacts présentent l'inconvénient d'être sensibles à l'environnement (pluie, vent, passage bref d'un corps). Or, cette sensibilité à l'environnement peut entraîner des arrêts intempestifs du mouvement de l'ouvrant.

Le document DE 100 47 085 décrit un dispositif de sécurité disposé sur la surface intérieure d'un capot de coffre, à proximité de l'arête située en regard de la carrosserie du véhicule. Toutefois, le capteur n'est pas un ruban sensible à la pression mais un interrupteur et n'est pas disposé sur le bord rabattu du sertissage formé en périphérie du capot.

Il est également décrit dans les demandes de brevets EP 0 916 538 A et EP 0 870 892 A des capteurs avec contact permettant d'éviter des pincements entre les bords d'un ouvrant tel qu'un toit ouvrant et la carrosserie d'un véhicule.

A cet effet, les demandes de brevets précédemment citées proposent d'intégrer un capteur de pression dans le joint disposé entre l'ouvrant et la carrosserie du véhicule.

Cependant, l'intégration d'un capteur de pression dans un joint présente de nombreux inconvénients.

En effet, le joint est soumis à de fortes contraintes, surtout s'il est appliqué à un ouvrant tel qu'un toit rétractable ou un capot de coffre motorisé. Ces contraintes peuvent engendrer une dégradation des capteurs et donc une diminution de la fiabilité des mesures de pression effectuées.

De plus, le capteur ne peut pas distinguer la pression exercée sur le joint par l'élément de carrosserie de la pression exercée par des objets ou des corps étrangers. Par conséquent, la mesure de la pression est imprécise.

En outre, la dureté des joints est susceptible d'évoluer dans le temps et suivant la température. Par conséquent, la précision de la mesure de pression réalisée par le capteur risque de se dégrader au cours du temps.

Enfin, l'intégration de capteurs intégrés à des joints sur un véhicule commercialisée n'est pas simple. En effet, l'intégration de ce type de capteurs nécessite le remplacement des joints des ouvrants.

L'invention a pour but de proposer une solution pour détecter la présence d'un objet ou d'un corps, qui soit à la fois simple, fiable, économique, peu encombrante et facilement intégrable dans un véhicule.

A cet effet, l'invention propose un véhicule automobile, et notamment un véhicule du type cabriolet, comportant au moins un ouvrant dont les mouvements de fermeture et/ou d'ouverture sont actionnés par des moyens moteurs pilotés par une unité de pilotage, ledit ouvrant possédant au moins une surface intérieure dirigée vers une partie du véhicule à recouvrir, et un sertissage comprenant un bord rabattu dont l'extremité forme une arête située en regard d'un élément de carrosserie ou d'une partie mobile dudit ouvrant lorsque l'ouvrant est dans sa position fermée, ledit véhicule possédant un joint d'étanchéité disposé entre ledit ouvrant et un élément de carrosserie du véhicule ou entre deux parties mobiles dudit ouvrant, et un capteur de pression apte à émettre un signal fonction de ladite pression, et disposé sur la surface intérieure et à proximité de ladite arête, ladite unité de pilotage étant agencée pour modifier la cinématique du mouvement en fonction du signal de pression mesurée au cours dudit mouvement, ledit véhicule étant caractérisé en ce que le capteur est un ruban sensible à la pression dissocié dudit joint et disposé sur ledit bord rabattu.

Ainsi, les mouvements de fermeture et d'ouverture des ouvrants sont sécurisés au niveau des arêtes des ouvrants.

Un avantage de la détection par ruban sensible à la pression réside dans le fait qu'un tel capteur permet de distinguer naturellement des interférences qui ne doivent pas être prises en compte d'interférences qui doivent être prises en compte. En effet, un tel capteur ne réagit qu'à partir d'un contact effectif. Ainsi, la sensibilité à l'environnement extérieure est fortement diminuée.

De plus, l'invention présente l'avantage de pouvoir mesurer précisément les pressions exercées sur les capteurs. Ainsi, il est possible de modifier différemment la cinématique du mouvement de l'ouvrant en fonction de la pression exercée.

D'autres objets et avantages de l'invention apparaîtront au cours de la description qui suit, faite en référence aux dessins annexés, dans lesquels :
- la figure 1 représente un véhicule automobile de type convertible à toit rétractable dont les arêtes susceptibles de pincer un corps ou un objet lors du mouvement des ouvrants sont indiquées en traits pointillés.
- la figure 2 représente une vue de côté du véhicule de la figure 1, le toit et le capot de coffre du véhicule étant dans une position intermédiaire.
- la figure 3 représente une coupe transversale selon l'axe 1-1 de la figure 1 montrant un capot de coffre selon l'invention.
- la figure 4 représente en vue de dessous le capot de coffre de la figure 3 tel qu'il serait vu en regardant dans la direction de la flèche F.
- les figures 5a, 5b, 6a, 6b et 7 représentent une vue agrandie du cercle de la figure 3 selon différents modes de réalisation.
- Les figures 8 et 9 représentent différents modes de réalisation applicables aux éléments de toit.

Le véhicule 1 comprend un coffre 2 pourvu d'un capot 3.

Le capot 3 possède deux positions d'ouverture. En effet, le capot 3 peut s'ouvrir au choix de l'avant vers l'arrière pour le rangement du toit escamotable 4 ou de l'arrière vers l'avant pour accéder au compartiment à bagages. A cet effet, le capot 3 de coffre comprend des articulations libérables 5,6 situées vers l'avant et vers l'arrière de celui-ci.

Le toit escamotable 4 est composé d'éléments de toits qui sont déplaçables entre une position déployée dans laquelle il recouvre l'habitacle 7 du véhicule 1 et une position escamotée dans laquelle ils sont rangés dans le coffre 2 du véhicule 1.

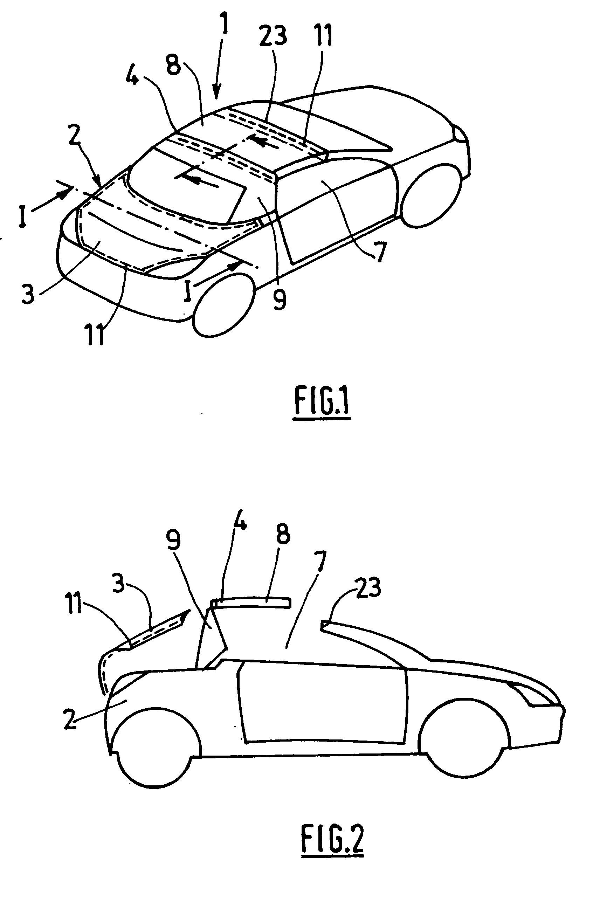

Dans le mode réalisation représenté à la figure 1, le toit 4 est composé d'un élément de toit avant 8 et d'un élément de toit arrière 9. Les éléments de toits 8,9 sont articulés entre eux et au châssis.

Les mouvements d'ouverture et de fermeture du toit escamotable 4 et du capot 3 de coffre 2 sont actionnés par des moyens moteurs. Les moyens moteurs sont pilotés par une unité de pilotage.

Dans le mode de réalisation détaillé sur les figures 1 et 2, les arêtes 10 présentant un danger de pincement apparaissent en traits pointillés. Afin de remédier à ce problème, des rubans sensibles à la pression (RSP) 11 sont disposés sur la surface intérieure 12 des ouvrants 3,4 à proximité des arêtes 10 des ouvrants. La surface intérieure 12 de ces ouvrants 3,4 est la surface dirigée vers la partie 2,7 du véhicule 1 à recouvrir.

La surface intérieure 12 des éléments de toit 8,9 est donc la surface des éléments de toit 8,9 dirigée vers l'habitacle 7 du véhicule 1. De même, la surface intérieure 12 du capot 3 de coffre 2 est la surface inférieure 12 dirigée vers le coffre 2 du véhicule 1.

Les capteurs 11 se présentent sous la forme d'un ruban mince dont l'épaisseur est de l'ordre de quelques dixièmes de millimètres. Le ruban 11 est constitué de plusieurs couches superposées. Une couche de matériau sensible à la pression, tel qu'un matériau semiconducteur, est intercalée entre deux couches de matériau conducteur qui forment les électrodes.

Une pression exercée sur le ruban 11 fait varier sa résistance électrique. La variation de résistance électrique est facilement détectable et mesurable. Ainsi, le ruban sensible à la pression 11 émet un signal fonction de la pression exercée.

Le véhicule 1 est également équipé d'une unité de pilotage. Cette unité de pilotage comprend un dispositif d'analyse et de comparaison du signal de pression détectée, un calculateur et un dispositif de commande des moyens moteurs. Ainsi, l'unité de pilotage est agencée pour modifier la cinématique du mouvement en fonction du signal de pression mesurée au cours du mouvement de l'ouvrant 3,4.

La modification de la cinématique du mouvement de l'ouvrant 3,4 consiste à ralentir, arrêter ou renverser le mouvement.

Notons que la plage de pression détectée est très étendue, elle s'étend de quelques grammes par centimètre carré à plusieurs kilogrammes par centimètre carré. Ceci permet notamment de pouvoir fixer des seuils de détection et en particulier de pouvoir fixer des paliers croissants.

Dans un mode de réalisation de l'invention, il est prévu de disposer de trois seuils de détection. Ces seuils de détection permettent des modifications de la cinématique du mouvement différentes selon la pression exercée.

Le fonctionnement de l'unité de pilotage est le suivant : l'unité de pilotage analyse le signal émis par la feuille sensible à la pression. L'unité de pilotage compare ensuite le signal émis avec les seuils croissants de détection. Enfin, en fonction de la comparaison du signal émis par la FSP, l'unité de pilotage commande les moyens moteurs afin de modifier la cinématique du mouvement de l'ouvrant 3,4.

Le premier seuil est le seuil bas de détection. Tout signal de détection inférieure à ce seuil ne provoque pas de modification de la cinématique du mouvement de l'ouvrant 3,4. Ainsi, la sensibilité aux événements extérieurs est limitée. Au contraire, tout signal de détection supérieur à ce seuil provoque le ralentissement du mouvement de l'ouvrant 3,4.

Le dépassement du second seuil provoque l'arrêt du mouvement de l'ouvrant 3,4.

Enfin, le dépassement du dernier seuil ou seuil haut de détection provoque le renversement du mouvement de l'ouvrant 3,4.

Dans un mode de réalisation de l'invention, il est également possible d'envisager de surveiller la variation de la pression au cours du temps et/ou l'accélération de cette variation. Ces paramètres peuvent également être comparés à des seuils afin de modifier différemment le mouvement de l'ouvrant 3,4.

Selon un mode de réalisation, les seuils de détection sont différents selon les endroits à protéger. En particulier, des zones très risquées telles que les bords avant 13 ou arrière 14 du capot 3 ou bien les bords avant et arrière 15 des éléments de toit 8,9 sont à protéger par des seuils de pression plus faibles.

La mise en oeuvre et l'intégration dans un véhicule d'un ruban sensible à la pression 11 est extrêmement simple. En effet, il suffit de fixer le ruban 11 par exemple par collage ou par adhérence directement sur une surface interne 11 à proximité immédiate de l'arête 10 du capot 3 ou du toit 4 susceptible de rencontrer un corps ou un objet. Alternativement, le ruban sensible à la pression 11 peut être fixé sur un bourrelet 16 de matériau élastique.

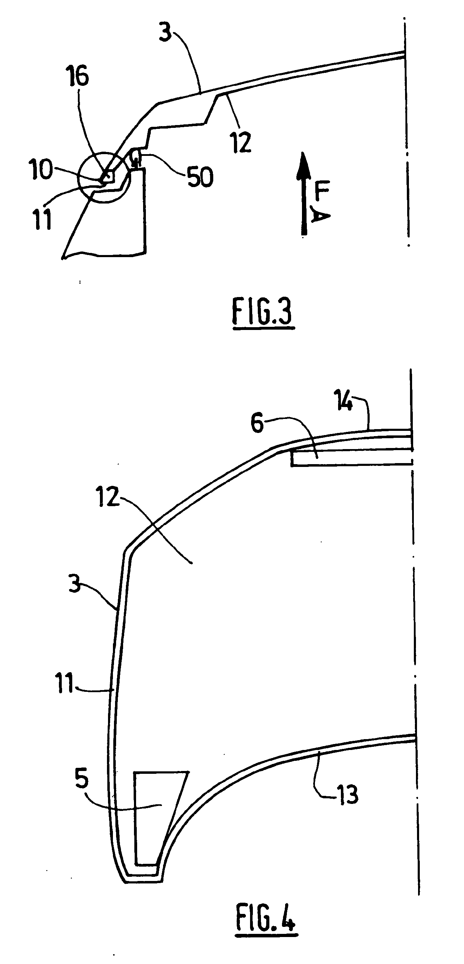

Selon le mode de réalisation détaillé sur la figure 3, le ruban sensible à la pression 11 est fixé sur la face intérieure 12. du capot 3 de coffre 2, à proximité de l'arête 10. En particulier, le ruban 11 est donc dissocié du joint 50.

Selon le mode de réalisation détaillé sur la figure 4, le ruban sensible à la pression 11 se situe de façon continue sur toute la périphérie du capot 3. Selon un autre mode de réalisation, les rubans sensibles à la pression 11 ne sont disposés que sur certaines portions de la périphérie du capot 3. Plus particulièrement, les RSP 11 peuvent être situées uniquement dans les zones les plus dangereuses tel que les zones situées au voisinage des articulations avant 5 et arrière 6 du capot 3.

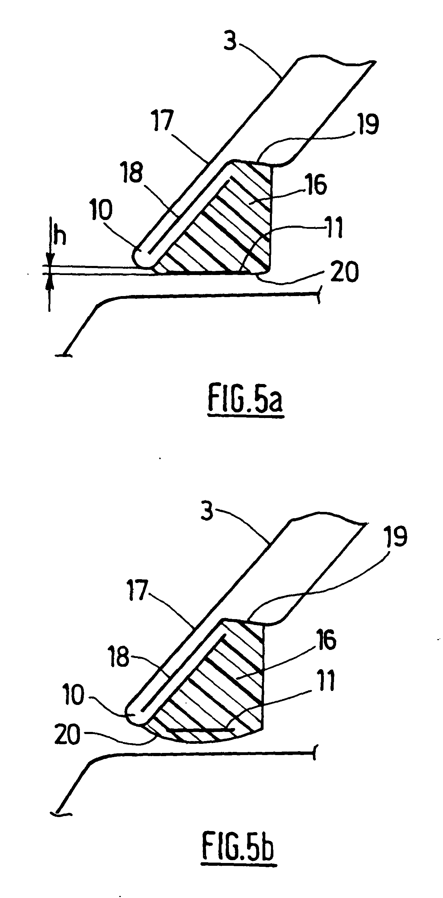

Selon le mode de réalisation détaillé sur les figures 5 à 9, les arêtes 10 des ouvrants 3,4 sont formées par l'extrémité d'un sertissage.

La peau 17 des ouvrants 3,4, c'est à dire la partie de carrosserie tournée vers l'extérieur est retournée de manière à prendre en sandwich le bord de la doublure 18 de l'ouvrant 3,4. La partie de la peau 17 qui est retournée pour former le sertissage est appelée bord rabattu du sertissage. La partie de l'ouvrant 3,4 située dans la continuité du sertissage à l'opposé de l'arête 10 comporte un épaulement.

Dans un mode de réalisation de l'invention, le ruban sensible à la pression 11 est disposé sur le bord rabattu du sertissage.

Le ruban sensible à la pression 11 est associé à un bourrelet 16 qui permet de supporter le RSP et/ou de lui transmettre une pression.

Le bourrelet 16 est fabriqué dans un matériau élastique. De préférence, le matériau élastique est un matériau synthétique tel qu'une mousse. Le matériau synthétique utilisé peut par exemple être du polyuréthanne.

La dureté du matériau élastique utilisé est comprise entre 15 et 70 shores, de préférence entre 30 et 60 shores. Ainsi, le matériau permet à la fois de transmettre une pression et de limiter l'effet de pincement en particulier lorsqu'il s'agit d'un doigt ou d'une main.

Selon le mode de réalisation de la figure 5a, le ruban sensible à la pression 11 est fixé sur le bourrelet 16 de matériau élastique.

Le RSP 11 dépasse légèrement, d'une hauteur h, l'arête 10 susceptible de pincer et se trouve en face d'une partie de carrosserie fixe. Le RSP forme un angle non nul par rapport au bord rabattu du sertissage. Le bourrelet 16 repose sur un épaulement 19 formé sur la doublure 18, et sur le bord serti de la surface intérieure 12 du capot. Dans ce mode de réalisation, le RSP 11 détecte directement un contact avec un objet ou corps étranger.

Selon le mode de réalisation de la figure 5b, le RSP 11 est également supporté par un bourrelet 16 de matériau élastique et se trouve en face d'une partie de carrosserie. Le RSP 11 est inséré à l'intérieur du bourrelet 16 de manière à le protéger des agressions extérieures. Les agressions extérieures peuvent par exemple être des agressions mécaniques ou climatiques.

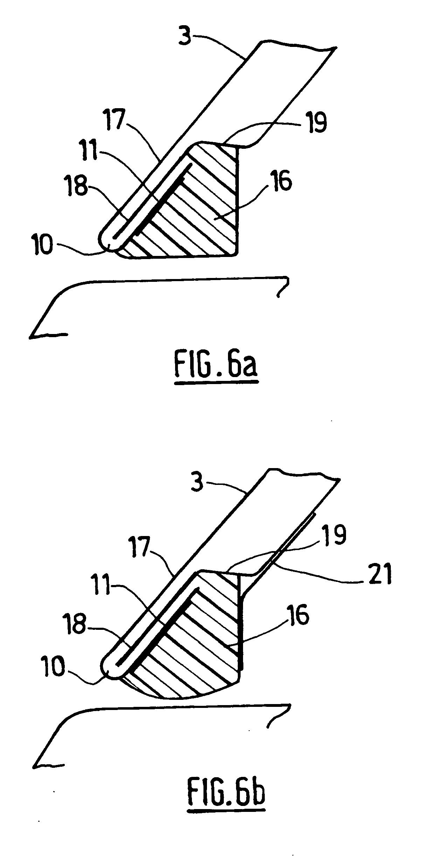

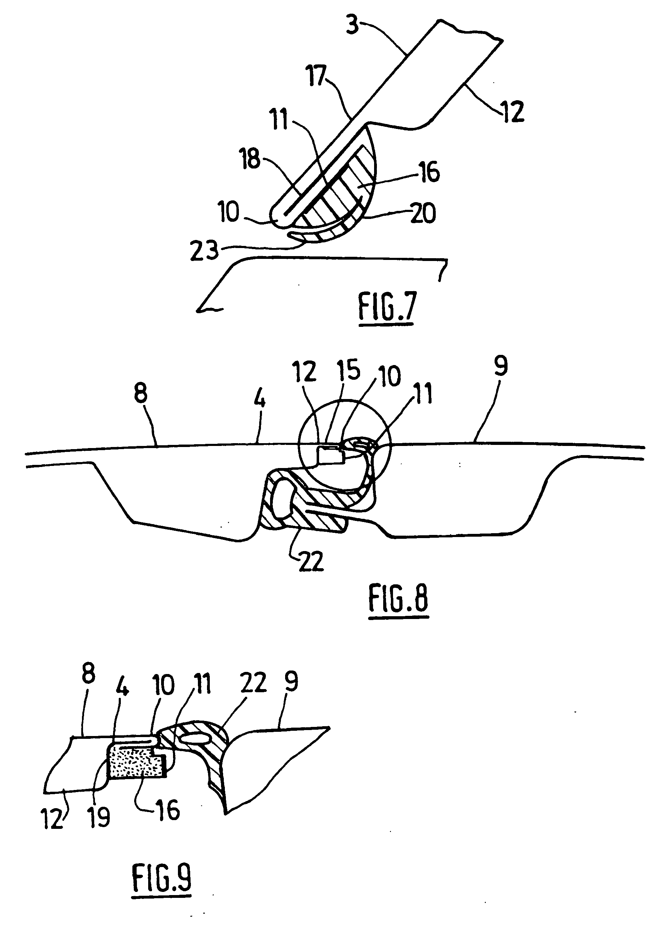

Selon les modes de réalisation représentés sur les figures 6a, 6b et 7, le RSP 11 est directement fixé sur le bord rabattu du sertissage, le bourrelet 16 de matériau élastique recouvrant entièrement le RSP 11. Ainsi, le ruban 11 est particulièrement bien protégé des agressions extérieures.

La pression appliquée sur le bord 20 du bourrelet 16 faisant face à l'élément de carrosserie est transmise par le bourrelet 16 au ruban sensible à la pression 11.

Selon le mode de réalisation représente figure 6b, pour améliorer la transmission de la pression, une cornière 21 fournissant une surface d'appui supplémentaire est fixée à la doublure 18 du capot. De préférence, afin de disposer d'une transmission maximale de la pression, la courbure du bourrelet 20 est tournée vers la partie de carrosserie.

Le mode de réalisation détaillée ci-dessus décrit un bourrelet 16 disposant d'une surface d'appui sur tous ses côtés, à l'exception de la surface 20 tournée vers la carrosserie du véhicule. C'est pourquoi, il est possible d'utiliser un matériau très mou, tel qu'une mousse; l'utilisation d'un matériau très mou permettant d'améliorer la sensibilité de la détection.

Selon le mode de réalisation détaillé sur la figure 7, le bourrelet 16 peut aussi posséder une lèvre 24 tournée vers la partie de carrosserie. Un pincement sur la lèvre 24 engendre une déformation du bourrelet 16 qui est détectée par le ruban sensible à la pression 11. En variante, la lèvre 24 pourrait être raccordée à la partie inférieure du bourrelet 16.

La figure 8 illustre la zone située entre le bord arrière 15 de l'élément de toit avant 8 et le bord avant de l'élément de toit arrière 9.

Les arêtes 10 du bord avant et du bord arrière 15 de l'élément de toit avant 8 sont également constituées d'un sertissage tel que précédemment décrit. De même, le bourrelet 16 s'appuie sur le bord retourné du sertissage et sur un épaulement 19 formé sur la doublure 18.

Un joint 22 est fixé sur l'élément de toit arrière 9 ou sur la traverse 23 du pare brise de façon à réaliser l'étanchéité.

Selon le mode de réalisation représenté figure 9a, le ruban sensible à la pression 11 est fixé sur le bourrelet 16. Le RSP 11 dépasse légèrement de l'arrête 10 susceptible de pincer et se trouve en face de l'élément de toit arrière 9 ou de la traverse 23 du pare brise.

Bien que ce mode de réalisation ne soit pas représenté, il est également possible de fixer le ruban sensible à la pression 11 directement sur la face intérieure 12 de l'élément de toit 8. Cependant, dans ce cas, le RSP 11 est fixé sur l'épaulement 19 de la doublure 18 et non sur la partie retournée du sertissage.

Notons que tous les modes de réalisation du bourrelet 16 décrits dans les figures 5 à 7 sont aussi applicables aux éléments de toit 8,9.

Dans un autre mode de réalisation non représentée, la surface intérieure 12 de l'ouvrant 3,4 peut également être recouvert en totalité ou en partie d'une feuille sensible à la pression apte à émettre un signal fonction de ladite pression. Ainsi, la surface intérieure 12 de l'ouvrant 3,4 est également sécurisée.

## Revendications

1. Véhicule (1) automobile, et notamment véhicule du type cabriolet, comportant au moins un ouvrant (3, 4) dont les mouvements de fermeture et/ou d'ouverture sont actionnés par des moyens moteurs pilotés par une unité de pilotage, ledit ouvrant (3, 4) possédant au moins une surface intérieure (12) dirigée vers une partie du véhicule (1) à recouvrir, et un sertissage comprenant un bord rabattu dont l'extrémité forme une arête (10) située en regard d'un élément de carrosserie ou d'une partie mobile dudit ouvrant lorsque l'ouvrant (3, 4) est dans sa position fermée ; ledit véhicule (1) possédant au moins un joint d'étanchéité (50, 22) disposé entre ledit ouvrant (3, 4) et un élément de carrosserie du véhicule ou entre deux parties mobiles (8, 9) dudit ouvrant (3, 4), et un capteur de pression, apte à émettre un signal fonction de ladite pression, et disposé sur la surface intérieure (12) et à proximité de ladite arête (10); ladite unité de pilotage étant agencée pour modifier la cinématique du mouvement en fonction du signal de pression mesurée au cours dudit mouvement ; ledit véhicule étant **caractérisé en ce que** le capteur est un ruban sensible à la pression (11) dissocié dudit joint (22, 50) et disposé sur ledit bord rabattu.

2. Véhicule automobile (1) selon la revendication 1 **caractérisé en ce que** le ruban sensible à la pression (11) est fixé directement sur le bord rabattu, un bourrelet (16) en matériau élastique transmettant la pression audit ruban sensible à la pression (11).

3. Véhicule automobile (1) selon la revendication 1, **caractérisé en ce que** ledit ruban sensible à la pression (11) est fixé par l'intermédiaire d'un bourrelet (16) en matériau élastique sur le bord rabattu.

4. Véhicule automobile (1) selon la revendication 2 ou 3, **caractérisé en ce que** le bourrelet (16) en matériau élastique est une mousse.

5. Véhicule automobile (1) selon l'une quelconque des revendications 2 à 4, **caractérisé en ce que** la dureté du matériau élastique est comprise entre 15 et 70 shores.

6. Véhicule automobile (1) selon la revendication 5, **caractérisé en ce que** la dureté du matériau élastique est comprise entre 30 et 60 shores.

7. Véhicule automobile (1) selon l'une quelconque des revendications 2 à 6, **caractérisé en ce que** ledit bourrelet (16) est disposé sur le bord rabattu du sertissage.

8. Véhicule automobile selon la revendication 7, **caractérisé en ce que** la partie de l'ouvrant (3,4) située dans la continuité du sertissage à l'opposé de l'arête (10) comporte un épaulement contre lequel le bourrelet (16) est en appui.

9. Véhicule automobile (1) selon l'une des revendications 3 à 8, **caractérisé en ce que** le ruban sensible à la pression (11) forme un angle non nul avec le bord rabattu du sertissage.

10. Véhicule automobile (1) selon l'un quelconque des revendications 3 à 9, **caractérisé en ce que** le ruban sensible à la pression (11) est disposé dans le bourrelet (16).

11. Véhicule automobile (1) selon l'une quelconque des revendications 3 à 10, **caractérisé en ce que** le ruban sensible à la pression dépasse légèrement, d'une hauteur h, l'arête 10 et se trouve en face d'une partie de carrosserie fixe ou d'un élément mobile de l'ouvrant.

12. Véhicule automobile (1) selon l'une quelconque des revendications 8 à 11, **caractérisé en ce que** l'ouvrant (3) comporte une doublure (18), une cornière (21) fixée à la doublure (18) fournissant une surface d'appui supplémentaire au bourrelet (16)

13. Véhicule automobile (1) selon l'un quelconque des revendications 2 à 12, **caractérisé en ce que** le bourrelet (16) comporte une lèvre (24).

14. Véhicule automobile (1) selon l'une des revendications précédentes, **caractérisé en ce que** l'unité de pilotage compare le signal de pression mesurée à des seuils croissants.

15. Véhicule automobile (1) selon la revendication 14, **caractérisé en ce que** l'unité de pilotage surveille la variation de la pression au cours du temps et/ou l'accélération de cette variation et les compare à des seuils croissants.

16. Véhicule automobile (1) selon l'une quelconque des revendications précédentes **caractérisé en ce que** la modification de la cinématique dudit mouvement consiste à ralentir, arrêter ou renverser ledit mouvement.

17. Véhicule automobile (1) selon l'une quelconque des revendications précédentes, **caractérisé en ce que** l'ouvrant est un capot (3) de coffre (2) ou un élément de toit rétractable (8, 9).

18. Véhicule automobile selon l'une quelconque des revendications précédentes, **caractérisé en ce que** la surface intérieure (12) est recouverte en totalité ou en partie d'une feuille sensible à la pression apte à émettre un signal fonction de ladite pression.

## Claims

1. A motor vehicle (1) and more particularly a vehicle of the convertible type, comprising at least one leaf (3,4) the closing and/or opening movements of which are activated by motor means driven by a driving unit, said leaf (3,4) having at least an inner surface (12) oriented towards a part of the vehicle (1) to be covered, and a beading comprising a hem, the end of which forms an edge (10) located opposite an element of the body or a mobile part of said leaf when said leaf (3,4) is in the closed position; said vehicle (1) having at least a sealing gasket (50,22) positioned between said leaf (3,4) and an element of the vehicle body or between two mobile parts (8,9) of said leaf (3,4) and a pressure sensor, capable of emitting a signal according to said pressure, and positioned on the inner surface (12) and close to said edge (10); said driving unit being so arranged as to modify the kinematics of the movement according to the pressure signal measured during said movement; said vehicle being **characterized in that** the detector is a pressure sensitive conductor tape (11) separated from said gasket (22,50) and positioned on said hem.

2. A motor vehicle (1) according to claim 1, **characterized in that** the pressure sensitive conductor tape (11) is fixed directly on the hem, a roll (16) made of an elastic material transmitting the pressure to said pressure sensitive conductor tape (11).

3. A motor vehicle (1) according to claim 1, **characterized in that** said pressure sensitive conductor tape (11) is fixed on the hem by means of a roll (16) made of an elastic material.

4. A motor vehicle (1) according to claim 2 or 3, **characterized in that** the roll (16) made of an elastic material is a foam.

5. A motor vehicle (1) according to any one of claims 2 to 4, **characterized in that** the hardness of the elastic material is comprised between 15 and 70 shores.

6. A motor vehicle (1) according to claim 5, **characterized in that** the hardness of the elastic material is comprised between 30 and 60 shores.

7. A motor vehicle (1) according to any one of claims 2 to 6, **characterized in that** said roll (16) is positioned on the beading hem.

8. A motor vehicle (1) according to claim 7, **characterized in that** the part of the leaf (3,4) positioned on the extension of the beading, opposite the edge (10) comprises a shoulder on which the roll (16) rests.

9. A motor vehicle (1) according to one of claims 3 to 8, **characterized in that** the pressure sensitive conductor tape (11) forms a non-null angle with the beading hem.

10. A motor vehicle (1) according to any one of claims 3 to 9, **characterized in that** the pressure sensitive conductor tape (11) is positioned in the roll (16).

11. A motor vehicle (1) according to any one of claims 3 to 10, **characterized in that** the pressure sensitive conductor tape (11) slightly exceeds, by a height h, the edge (10) and faces a fixed part of the body or of a mobile element of the leaf.

12. A motor vehicle (1) according to any one of claims 8 to 11, **characterized in that** the leaf (3) comprises a liner (18), an angle iron (21) fixed to the liner (18) providing the roll (16) with an additional rest surface.

13. A motor vehicle (1) according to any one of claims 2 to 12, **characterized in that** the roll (16) comprises a lip (24).

14. A motor vehicle (1) according to one of the preceding claims, **characterized in that** the driving unit compares the measured pressure signal with increasing thresholds.

15. A motor vehicle (1) according to claim 14, **characterized in that** the driving unit monitors the pressure variation over time and/or the acceleration of such variation and compares it with increasing thresholds.

16. A motor vehicle (1) according to any one of the preceding claims, **characterized in that** the modification of the kinematics of said movement consists in slowing down, stopping or reversing said movement.

17. A motor vehicle (1) according to any one of claims 3 to 10, **characterized in that** the leaf is a deck (2) lid (3) or a retractable roof element (8,9).

18. A motor vehicle (1) according to any one of the preceding claims, **characterized in that** the inner surface (12) is totally or partly covered with a pressure sensitive sheet capable of emitting a signal according to said pressure.

## Patentansprüche

1. Kraftfahrzeug (1) und insbesondere ein Fahrzeug von der Art eines Kabrioletts, das zumindest einen Öffnungsteil (3, 4) umfaßt, dessen Bewegungen zum Schließen und/oder Öffnen durch Antriebsmittel betätigt werden, die durch eine Steuereinheit gesteuert werden, wobei der besagte Öffnungsteil (3, 4) zumindest eine Innenfläche (12) besitzt, die zu einem zu überdeckenden Teil des Fahrzeugs (1) gerichtet ist, und eine Bördelverbindung, die eine abgeklappte Kante umfaßt, deren Ende einen Grat (10) bildet, der sich vor einem Karosserieteil oder einem beweglichen Teil des besagten Öffnungsteils befindet, wenn das Öffnungsteil (3, 4) in seiner geschlossenen Position ist; Wobei das besagte Fahrzeug (1) zumindest ein Dichtungsprofil (50, 22) besitzt, das zwischen dem besagten Öffnungsteil (3, 4) und einem Karosserieelement des Fahrzugs oder zwischen zwei beweglichen Teilen (8, 9) des besagten Öffnungsteils (3, 4) angeordnet ist, und einen Druckfühler, der geeignet ist, ein Signal je nach dem besagten Druck zu senden, und der auf der Innenfläche (12) und in Nähe des besagten Grats (10) angeordnet ist; Wobei die besagte Steuereinheit so gestaltet ist, daß sie die Kinematik der Bewegung je nach dem Signal des während dieser besagten Bewegung gemessenen Drucks ändert; Wobei das besagte Fahrzeug **dadurch gekennzeichnet ist, daß** der Fühler ein druckempfindliches Band (11) ist, das vom besagten Dichtungsprofil (22, 50) getrennt ist und auf der besagten abgeklappten Kante angeordnet ist.

2. Kraftfahrzeug (1) nach Anspruch 1, **dadurch gekennzeichnet, daß** das druckempfindliche Band (11) direkt auf der abgeklappten Kante befestigt ist, wobei ein Wulst (16) aus elastischem Material den Druck an das besagte druckempfindliche Band (11) überträgt.

3. Kraftfahrzeug (1) nach Anspruch 1, **dadurch gekennzeichnet, daß** das druckempfindliche Band (11) vermittels eines Wulstes (16) aus elastischem Material auf der abgeklappten Kante befestigt ist.

4. Kraftfahrzeug (1) nach Anspruch 2 oder 3, **dadurch gekennzeichnet, daß** der Wulst (16) aus elastischem Material ein Schaumstoff ist.

5. Kraftfahrzeug (1) nach einem beliebigen der vorstehenden Ansprüche 2 bis 4, **dadurch gekennzeichnet, daß** die Härte des elastischen Materials bei zwischen 15 und 70 Shore liegt.

6. Kraftfahrzeug (1) nach Anspruch 5, **dadurch gekennzeichnet, daß** die Härte des elastischen Materials bei zwischen 30 und 60 Shore liegt.

7. Kraftfahrzeug (1) nach einem beliebigen der vorstehenden Ansprüche 2 bis 6, **dadurch gekennzeichnet, daß** der besagte Wulst (16) auf der abgeklappten Kante der Bördelverbindung angeordnet ist.

8. 5. Kraftfahrzeug (1) nach Anspruch 7, **dadurch gekennzeichnet, daß** der Teil des Öffnungsteils (3, 4), der sich in der Fortsetzung der Bördelverbindung entgegengesetzt zum Grat (10) befindet, eine Schulter umfaßt, an der der Wulst (16) anliegt.

9. Kraftfahrzeug (1) nach einem beliebigen der vorstehenden Ansprüche 3 bis 8, **dadurch gekennzeichnet, daß** das druckempfindliche Band (11) einen Winkel ungleich Null mit der abgeklappten Kante der Bördelverbindung bildet.

10. Kraftfahrzeug (1) nach einem beliebigen der vorstehenden Ansprüche 3 bis 9, **dadurch gekennzeichnet, daß** das druckempfindliche Band (11) im Wulst (16) angeordnet ist.

11. Kraftfahrzeug (1) nach einem beliebigen der vorstehenden Ansprüche 3 bis 10, **dadurch gekennzeichnet, daß** das druckempfindliche Band (11) um eine Höhe h leicht vom Grat 10 übersteht und sich gegenüber einem feststehenden Karosserieteil oder einem beweglichen Element des Öffnungsteils befindet.

12. Kraftfahrzeug (1) nach einem beliebigen der vorstehenden Ansprüche 8 bis 11, **dadurch gekennzeichnet, daß** der Öffnungsteil (3) ein Futter (18), einen Winkelstahl (21) umfaßt, der am Futter (18) befestigt ist und dem Wulst (16) eine zusätzliche Anliegefläche bietet.

13. Kraftfahrzeug (1) nach einem beliebigen der vorstehenden Ansprüche 2 bis 12, **dadurch gekennzeichnet, daß** der Wulst (16) eine Lippe (24) umfaßt.

14. Kraftfahrzeug (1) nach einem beliebigen der vorstehenden Ansprüche, **dadurch gekennzeichnet, daß** die Steuereinheit das Signal des gemessenen Drucks mit wachsenden Schwellenwerten vergleicht.

15. Kraftfahrzeug (1) nach Anspruch 14, **dadurch gekennzeichnet, daß** die Steuereinheit die Schwankung des Drucks im Zeitverlauf und/oder die Beschleunigung dieser Schwankung überwacht und sie mit wachsenden Schwellenwerten vergleicht.

16. Kraftfahrzeug (1) nach einem beliebigen der vorstehenden Ansprüche, **dadurch gekennzeichnet, daß** die Änderung der Kinematik der besagten Bewegung darin besteht, die besagte Bewegung zu verlangsamen, einzustellen oder umzukehren.

17. Kraftfahrzeug (1) nach einem beliebigen der vorstehenden Ansprüche, **dadurch gekennzeichnet, daß** der Öffnungsteil ein Deckel (3) des Kofferraums (2) oder ein versenkbares Dachelement (8, 9) ist.

18. Kraftfahrzeug (1) nach einem beliebigen der vorstehenden Ansprüche, **dadurch gekennzeichnet, daß** die Innenfläche (12) vollständig oder teilweise mit einer druckempfindlichen Folie abgedeckt ist, die geeignet ist, ein Signal in Abhängigkeit vom besagten Druck zu senden.
